# EUROPEAN PATENT APPLICATION

(11) **EP 2 315 298 A1**
(43) Date of publication of application: **27.04.2011**
(21) Application number: 09808141.7
(22) Date of filing: 29.06.2009
(51) Int. Cl.: H01M 4/02, H01M 4/04

(54) **RECHARGEABLE BATTERY WITH NONAQUEOUS ELECTROLYTE AND PROCESS FOR PRODUCING THE RECHARGEABLE BATTERY**

(30) Priority: 18.08.2008 JP 2008210131; 23.04.2009 JP 2009105601
(71) Applicant: Sumitomo Electric Industries, Ltd., Chuo-ku Osaka-shi Osaka 541-0041 (JP)
(72) Inventor: OGAWA, Mitsuyasu, Itami-shi Hyogo 664-0016 (JP); OTA, Nobuhiro, Itami-shi Hyogo 664-0016 (JP); UEMURA, Takashi, Itami-shi Hyogo 664-0016 (JP); KANDA, Ryoko, Itami-shi Hyogo 664-0016 (JP); YOSHIDA, Kentaro, Itami-shi Hyogo 664-0016 (JP)
(74) Representative: Setna, Rohan P.
(86) International application number: PCT/JP2009/061849
(87) International publication number: WO 2010/021205

(57) **Abstract**

There is provided a nonaqueous electrolyte secondary battery in which lithium ions can move smoothly between a positive electrode and a solid electrolyte layer, the nonaqueous electrolyte secondary battery having improved internal resistance.

The nonaqueous electrolyte secondary battery includes a positive electrode 1, a negative electrode 2, and a solid electrolyte layer 3 arranged between the positive and negative electrodes. The positive electrode 1 includes a positive-electrode sintered body 10 formed by firing a powder containing a positive-electrode active material and includes a cover layer 11 arranged on a surface of the positive-electrode sintered body 10 adjacent to the solid electrolyte layer 3, the cover layer containing a positive-electrode active material. The cover layer 11 contains a compound having a layered rock-salt structure. Preferably, the direction of the c-axis of the crystal of the compound is not perpendicular to the surface of the positive-electrode sintered body. More preferably, a buffer layer 4 composed of LiNbO₃ is arranged between the positive electrode 1 and the solid electrolyte layer 3, the buffer layer being configured to reduce interface resistance.

## Description

### Technical Field

The present invention relates to a nonaqueous electrolyte secondary battery including a positive electrode, a negative electrode, and a solid electrolyte layer, and to a method for producing the nonaqueous electrolyte secondary battery. In particular, the present invention relates to a nonaqueous electrolyte secondary battery in which lithium ions can move smoothly between a positive electrode and a solid electrolyte layer, i.e., a nonaqueous electrolyte secondary battery having improved internal resistance.

### Background Art

Nonaqueous electrolyte secondary batteries, in particular, lithium-ion secondary batteries, have long life, high efficiency, and high capacity and are used as power supplies for cellular phones, notebook personal computers, digital cameras, and so forth.

A nonaqueous electrolyte secondary battery is charged and discharged by moving lithium ions between a positive electrode and a negative electrode through an electrolyte layer. To improve safety, nonaqueous electrolyte secondary batteries including incombustible inorganic solid electrolytes in place of organic solvent electrolytes have recently been reported (for example, see Patent Documents 1 to 4).

Patent Documents 1 to 4 disclose that sintered bodies produced by firing powders containing positive-electrode active materials are used as positive electrodes. Non-Patent Documents 1 and 2 each disclose that in order to reduce the interface resistance between LiCoO₂ (positive-electrode active material) and a sulfide-based solid electrolyte, a buffer layer composed of Li₄Ti₅O₁₂ or LiNbO₃ is formed by electrostatic atomization on a surface of a LiCoO₂ powder.

### Prior Art Document

### Patent Document

[Patent Document 1] Japanese Unexamined Patent Application Publication No. 2000-164217
[Patent Document 2] Japanese Unexamined Patent Application Publication No. 2007-258148
[Patent Document 3] Japanese Unexamined Patent Application Publication No. 2007-258165
[Patent Document 4] Japanese Unexamined Patent Application Publication No. 2007-5279

### Non-Patent Document

[Non-Patent Document 1] Advanced Materials, 18(2006)2226
[Non-Patent Document 2] Proceedings of the 32nd Conference on Solid State Ionics, p. 130-131

### Disclosure of Invention

### Problems to be Solved by the Invention

In a nonaqueous electrolyte secondary battery including a solid electrolyte, all materials constituting the battery are solid; hence, the interface between a positive electrode and a solid electrolyte layer serves as a bonded surface between the solid materials. The positive electrode formed of a sintered body is usually porous. From a microscopic viewpoint, thus, the electrode has a rough surface and many micropores on the surface. In a nonaqueous electrolyte secondary battery of the related art, it is thus difficult to form a satisfactory bonded interface between a positive electrode and a solid electrolyte layer. This leads to an increase in resistance to the movement of lithium ions at the interface, increasing the internal resistance of the battery.

The present invention has been made in light of the circumstances described above. It is an object of the present invention to provide a nonaqueous electrolyte secondary battery in which lithium ions can move smoothly between a positive electrode and a solid electrolyte layer, i.e., a nonaqueous electrolyte secondary battery having improved internal resistance.

### Means for Solving the Problems

A nonaqueous electrolyte secondary battery of the present invention includes a positive electrode, a negative electrode, and a solid electrolyte layer arranged between the positive electrode and the negative electrode. The positive electrode includes a positive-electrode sintered body formed by firing a powder containing a positive-electrode active material and includes a cover layer arranged on a surface of the positive-electrode sintered body adjacent to the solid electrolyte layer, the cover layer containing a positive-electrode active material.

A method for producing a nonaqueous electrolyte secondary battery of the present invention includes a sintering step of firing a powder containing a positive-electrode active material to form a positive-electrode sintered body, and a covering step of forming a cover layer containing a positive-electrode active material on a surface of the positive-electrode sintered body adjacent to the solid electrolyte layer by a gas-phase method.

According to the nonaqueous electrolyte secondary battery of the present invention, the cover layer is arranged on the surface of the positive-electrode sintered body adjacent to the solid electrolyte layer. This leads to a smooth and dense surface structure of the positive electrode adjacent to the solid electrolyte layer compared with a conventional positive electrode formed of a sintered body on which a cover layer is not arranged. It is thus possible to form satisfactory bonded interface between the positive electrode and the solid electrolyte layer, reducing resistance (interface resistance) to the movement of lithium ions at the interface. This results in smooth movement of lithium ions between the positive electrode and the solid electrolyte layer.

The cover layer is a smooth and dense layer and has good surface smoothness compared with that of the positive-electrode sintered body. Such a cover layer can be formed by a gas-phase method or the like. Examples of the gas-phase method include physical vapor deposition (PVD) methods, such as vacuum evaporation, sputtering, ion plating, and pulsed laser deposition; and chemical vapor deposition (CVD). From the viewpoint of forming a smooth and dense layer, the gas-phase method seems to be the most suitable. Alternatively, the cover layer may be formed by a sol-gel method, spin coating, or the like. In particular, the cover layer preferably has a surface roughness Ra of 0.1 µm or less. Note that the surface roughness defined here is based on the definition of an arithmetic mean roughness (Ra) according to JIS B0601:2001. Furthermore, the cover layer may be formed after the surface quality of the positive-electrode sintered body is improved by polishing the surface of the positive-electrode sintered body adjacent to the solid electrolyte layer.

Examples of the positive-electrode active material that can constitute the positive-electrode sintered body and the cover layer include oxides, such as lithium cobalt oxide (LiCoO₂) lithium nickel oxide (LiNiO₂), lithium manganese oxide (LiMn₂O₄ and LiMnO₂), lithium nickel manganese oxide (LiNi_{0.5}Mn_{0.5}O₂), lithium nickel cobalt manganese oxide (LiNi_{0.33}Co_{0.33}Mn_{0.33}O₂), and manganese oxide (MnO₂); phosphate compounds such as olivine-type lithium iron phosphate (LiFePO₄); and mixtures thereof. Furthermore, sulfides such as sulfur (S), iron sulfide (FeS), iron disulfide (FeS₂), lithium sulfide (Li₂S), and titanium sulfide (TiS₂), and mixtures thereof may be used.

The positive-electrode sintered body and the cover layer may be composed of different positive-electrode active materials. In the case where the positive-electrode sintered body and the cover layer are composed of different positive-electrode active materials, for example, the positive-electrode sintered body is composed of a positive-electrode active material having high capacity or being inexpensive, and the cover layer is composed of a positive-electrode active material having low resistance to the movement of lithium ions. Specifically, the positive-electrode sintered body is composed of LiMn₂O₄, and the cover layer is composed of LiCoO_{2.}

Each of the positive-electrode sintered body and the cover layer may further contain a conductive aid. Examples of the conductive aid that can be used include carbon black such as acetylene black, natural graphite, thermally expanded graphite, carbon fibers, ruthenium oxide, titanium oxide, and metal fibers of aluminum and nickel.

In the present invention, preferably, the cover layer contains a compound having a layered rock-salt structure as the positive-electrode active material, and the direction of the c-axis of the crystal of the compound is not perpendicular to the surface of the positive-electrode sintered body.

Among these positive-electrode active materials, a compound having a layered rock-salt structure contributes to improvement in discharge characteristics of a battery because of the high mobility of lithium ions owing to its crystal structure. In particular, in the case where the cover layer contains a compound having a layered rock-salt structure, when the direction of the c-axis of the crystal of the compound is not perpendicular to the surface of the positive-electrode sintered body, lithium ions are readily intercalated and deintercalated at the surface of the positive electrode adjacent to the solid electrolyte layer, thereby further reducing interface resistance. Here, the "direction of the c-axis of the crystal of the compound is not perpendicular to the surface of the positive-electrode sintered body" is used to indicate that the c-axis of the crystal is inclined to the surface of the positive-electrode sintered body and that the crystal structure is more oriented in the direction of the ab axes than the direction of the c-axis. In particular, preferably, the peak intensity ratio, (003)/(101), measured by X-ray diffraction (XRD) meets (003)/(101) < 2.

In particular, LiCoO₂, LiNiO₂, or a mixture thereof, LiCoO₂ and LiNiO₂ having layered rock-salt structures, is particularly suitable as the positive-electrode active material because a high voltage is obtained and electron conductivity and lithium-ion conductivity are high.

An example of a method for forming the cover layer constituted by the positive-electrode active material having a layered rock-salt structure is a method in which after the formation of the cover layer by the foregoing gas-phase method, the cover layer is subjected to annealing treatment. For example, the annealing treatment is preferably performed at 400°C to 700°C for 1 to 10 hours.

In the present invention, the cover layer preferably has a thickness of 0.02 µm or more.

In the case where the cover layer has a thickness of 0.02 µm or more, the cover layer has sufficient surface smoothness. Hence, the surface of the positive electrode adjacent to the solid electrolyte layer is easy to have a smooth and dense surface structure. The upper limit of the thickness of the cover layer is not particularly limited but is preferably 10 µm or less in view of achieving good productivity and a reduction in the height of the battery.

In the present invention, the solid electrolyte layer preferably contains a sulfide-based solid electrolyte.

Usable examples of the solid electrolyte constituting the solid electrolyte layer include sulfide-based solid electrolytes such as Li-P-S- and Li-P-S-O-based solid electrolytes; and oxide-based solid electrolytes such as Li-P-O- and Li-P-O-N-based solid electrolytes. Among these, a sulfide-based solid electrolyte is suitable as a material constituting the solid electrolyte layer because of its high lithium-ion conductivity. Specific examples of the sulfide-based solid electrolyte include Li₂S-P₂S₅-SiS₂-based solid electrolytes containing SiS₂, Li₂S-P₂S₅-SiS₂-Al₂S₃-based solid electrolytes containing Al₂S₃, and Li₂S-P₂S₅-P₂O₅-based solid electrolytes containing P₂O₅ in addition to Li₂S-P₂S₅-based solid electrolytes mainly containing Li₂S and P₂S₅.

In the present invention, a buffer layer is preferably arranged between the positive electrode and the solid electrolyte layer, the buffer layer being configured to reduce interface resistance.

For example, in the case where an oxide is used as the positive-electrode active material and where a sulfide is used for the solid electrolyte layer, lithium ions can be moved from the solid electrolyte layer to the positive electrode at the interface between the positive electrode and the solid electrolyte layer because oxide ions strongly attract lithium ions compared with the sulfide ions. Thus, charge polarization occurs in the vicinity of the interface between the positive electrode and the solid electrolyte layer, causing the formation of a charge depletion layer and an increase in interface resistance. Accordingly, the arrangement of the buffer layer between the positive electrode and the solid electrolyte layer further reduces the interface resistance.

Usable examples of a material constituting the buffer layer include Li₄Ti₅O₁₂, LiNbO₃, LiₓLa_{(2-x)/3}TiO₃ (x=0.1 to 0.5), Li₇₊ₓLa₃Zr₂O_{12+(x/2)} (-5 ≤ x ≤ 3), Li_{3.6}Si_{0.6}P_{0.4}O₄, Li_{1.3}Al_{0.3}Ti_{1.7}(PO₄)_{3,} Li_{1.8}Cr_{0.8}Ti_{1.2}(PO₄)_{3,} Li_{1.4}In_{0.4}Ti_{1.6}(PO₄)₃ and LiTaO₃.

The buffer layer preferably has a thickness of 2 nm or more in order to provide the effect of reducing the interface resistance. Furthermore, the buffer layer preferably has a thickness of less than 1 µm in view of achieving a reduction in the height of a battery and ensuring the mobility of lithium ions during charging and discharging. In the present invention, since the surface of the positive electrode adjacent to the solid electrolyte layer has excellent surface smoothness, the surface of the positive electrode adjacent to the solid electrolyte can be uniformly covered with such a thin buffer layer, thus effectively reducing the interface resistance. More preferably, the buffer layer has a thickness of 5 nm to 50 nm.

At least one buffer layer may be arranged between the positive electrode and the solid electrolyte layer. Unlike the related art, there is no need to form buffer layers on surfaces of particles of a positive-electrode active material. Thus, the battery of the present invention is excellent in productivity. Furthermore, in the battery of the present invention, it is possible to reduce the thickness of the positive electrode.

Examples of a negative-electrode active material that can be used include metallic lithium (elemental Li metal), lithium alloys (alloys of Li and additional elements), carbon (C) such as graphite, silicon (Si), and indium (In). Among these, a material containing lithium, in particular, metallic lithium, is suitable because the material containing lithium advantageously contributes to increases in the capacity and voltage of a battery. Usable examples of additional elements in lithium alloys include aluminum (Al), silicon (Si), tin (Sn), bismuth (Bi), zinc (Zn), and indium (In).

### Advantages

The nonaqueous electrolyte secondary battery of the present invention includes the cover layer arranged on the surface of the positive-electrode sintered body adjacent to the solid electrolyte, thereby reducing the interface resistance between the positive electrode and the solid electrolyte layer. This results in smooth movement of lithium ions between the positive electrode and the solid electrolyte layer. That is, the internal resistance of the battery is reduced.

Furthermore, according to the method for producing a nonaqueous electrolyte secondary battery of the present invention, it is possible to produce a nonaqueous electrolyte secondary battery having improved internal resistance.

### Brief Description of Drawings

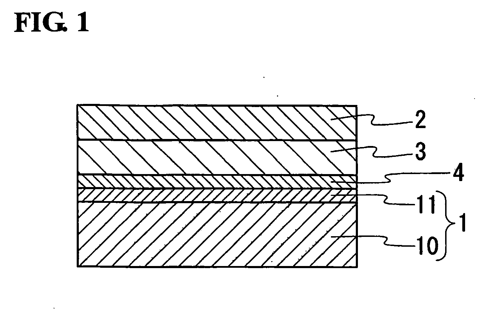

Fig. 1] Figure 1 is a schematic cross-sectional view of a nonaqueous electrolyte secondary battery according to an embodiment of the present invention.

### Best Mode for Carrying Out the Invention

Figure 1 is a schematic cross-sectional view of a nonaqueous electrolyte secondary battery according to an embodiment of the present invention. The nonaqueous electrolyte secondary battery of the present invention has a basic structure in which a positive electrode 1, an electrolyte layer 3, and a negative electrode 2 are stacked in that order as shown in Fig. 1. The positive electrode 1 includes a positive-electrode sintered body 10 and a cover layer 11 arranged on a surface of the positive-electrode sintered body 10 adjacent to the solid electrolyte layer 3. Figure 1 shows a structure in which a buffer layer 4 is arranged between the positive electrode 1 and the solid electrolyte layer 3.

### (EXAMPLE 1)

A lithium-ion secondary battery having the stacked structure shown in Fig. 1 was produced. The internal resistance of the battery was evaluated by a charge-discharge cycle test.

### <Production Procedure of Battery>

First, 0.5 g of a LiCoO₂ powder was weighed, charged into a die with a diameter of 20 mm, and pressed at 300 MPa to form a green compact. The green compact was placed in an electric furnace and fired at 1100° C for 6 hours to form the positive-electrode sintered body 10. The surfaces of the positive-electrode sintered body 10 were polished so that the positive-electrode sintered body 10 had a thickness of 200 µm.

Then the cover layer 11 composed of LiCoO₂ was formed by pulsed laser deposition on the positive-electrode sintered body 10. The resulting stack was subjected to annealing treatment at 500° C for 3 hours to complete the positive electrode 1. In this case, the cover layer 11 was formed while a surface of the positive-electrode sintered body 10 to be covered with the cover layer 11 was inclined at an angle of 60° to an evaporation source. The thickness of the cover layer 11 was set to 1 µm. The measurement of X-ray diffraction (XRD) of the cover layer 11 showed that the cover layer 11 was composed of LiCoO₂ having a layered rock-salt structure and that the direction of the c-axis of the crystal was not perpendicular to the surface of the positive-electrode sintered body 10. The peak intensity ratio of (003) to (101), i.e., (003)/(101), was 1.7. The surface roughness Ra of the cover layer 11 was measured with a profilometer (Model "DEKTAK 3030", manufactured by Sloan) according to JIS B0601:2001 and determined to be 20 nm.

The buffer layer 4 composed of LiNbO₃ was formed by sputtering on the positive electrode 1 (cover layer 11) before the formation of the solid electrolyte layer 3 on the positive electrode 1. The thickness of the buffer layer 4 was set to 20 nm.

Next, the solid electrolyte layer 3 composed of a Li₂S-P₂S₅-based solid electrolyte was formed by vacuum evaporation on the buffer layer 4. The thickness of the solid electrolyte layer 3 was set to 10 µm.

Then a negative-electrode active material layer composed of metallic Li was formed by vacuum evaporation on the solid electrolyte layer 3. The negative-electrode active material layer was defined as the negative electrode 2. The thickness of the negative electrode 2 was set to 10 µm.

Finally, the resulting stack described above was placed in a case, resulting in the completion of a coin-shaped lithium-ion secondary battery.

### (EXAMPLE 2)

A lithium-ion secondary battery was produced as in Example 1, except that the direction of the c-axis of the crystal structure of the cover layer 11 was perpendicular to the surface of the positive-electrode sintered body 10. In this case, the cover layer 11 was formed while a surface of the positive-electrode sintered body 10 to be covered with the cover layer 11 faced an evaporation source. The peak intensity ratio, (003)/(101), of the cover layer 11 was 2.8. The cover layer 11 had a surface roughness Ra of 20 nm.

### (COMPARATIVE EXAMPLE 1)

A lithium-ion secondary battery was produced as in Example 1, except that the formation of the cover layer 11 and the annealing treatment were not performed. In this case, the positive electrode 1 (positive-electrode sintered body 10) had a surface roughness Ra of 310 nm. Note that the surface roughness was measured after polishing the surface of the positive-electrode sintered body 10.

### <Evaluation of Battery>

A charge-discharge cycle test was performed on each of the batteries produced in Examples 1 and 2 and Comparative Example 1 at a cut-off voltage of 3 V to 4.2 V and a current density of 0.05 mA/cm². A drop in voltage for 60 seconds after the start of discharge was measured, and the internal resistance of each battery was calculated.

The results showed that the internal resistances of the batteries produced in Examples 1 and 2 were 180 Ωcm² and 620 Ωcm², which were low resistances. In contrast, the internal resistance of the battery produced in Comparative Example 1 was 28,000 Ωcm², which was a high resistance.

From these results, the nonaqueous electrolyte secondary battery of the present invention includes the cover layer 11 having excellent smoothness and located on the surface of the positive-electrode sintered body 10 adjacent to the solid electrolyte layer 3, thus reducing the interface resistance between the positive electrode 1 and the solid electrolyte layer 3. This results in the smooth transportation of lithium ions, thereby reducing the internal resistance. Furthermore, in the case where the direction of the c-axis of the crystal of the cover layer 11 is not perpendicular to the surface of the positive-electrode sintered body 10, the interface resistance is low, resulting in a further reduction in internal resistance.

### (EXAMPLE 3)

Batteries were produced as in Example 1, except that the cover layers 11 with different thicknesses were used. Each of the resulting batteries was subjected to the charge-discharge cycle test under the same conditions as above, and the internal resistance of each battery was calculated. The results were shown in Table 1.

**Table 1**

| | | | | | | | |
|---|---|---|---|---|---|---|---|
| Thickness (µm) | 0.01 | 0.02 | 0.05 | 0.5 | 0.1 | 1.0 | 3.0 |
| Internal resistance (Ωcm²) | 3300 | 570 | 320 | 280 | 340 | 180 | 240 |

The results shown in Table 1 showed that the cover layer preferably had a thickness of 0.02 µm to 3.0 µm.

The present invention is not limited to embodiments described above. Various changes may be made without departing from the scope of the invention. For example, the thickness of the cover layer may be appropriately changed. A material other than LiCoO₂ may be used as a positive-electrode active material.

### Industrial Applicability

A nonaqueous electrolyte secondary battery of the present invention is suitably applicable to power supplies for use in cellular phones, notebook personal computers, digital cameras, electric vehicles and others.

### Reference Numerals

- 1: positive electrode
- 2: negative electrode
- 3: solid electrolyte layer
- 4: buffer layer
- 10: positive-electrode sintered body
- 11: cover layer

## Claims

1. A nonaqueous electrolyte secondary battery comprising a positive electrode, a negative electrode, and a solid electrolyte layer arranged between the positive electrode and the negative electrode,
wherein the positive electrode includes a positive-electrode sintered body formed by firing a powder containing a positive-electrode active material and includes a cover layer arranged on a surface of the positive-electrode sintered body adjacent to the solid electrolyte layer, the cover layer containing a positive-electrode active material.

2. The nonaqueous electrolyte secondary battery according to Claim 1, wherein the cover layer contains a compound having a layered rock-salt structure, and the direction of the c-axis of the crystal of the compound is not perpendicular to the surface of the positive-electrode sintered body.

3. The nonaqueous electrolyte secondary battery according to Claim 1 or 2, wherein the cover layer has a thickness of 0.02 µm or more.

4. The nonaqueous electrolyte secondary battery according to Claim 2 or 3, wherein the compound is lithium cobalt oxide, lithium nickel oxide, or a mixture of lithium cobalt oxide and lithium nickel oxide.

5. The nonaqueous electrolyte secondary battery according to any one of Claims 1 to 4, wherein the solid electrolyte layer contains a sulfide-based solid electrolyte.

6. The nonaqueous electrolyte secondary battery according to any one of Claims 1 to 5, further comprising a buffer layer arranged between the positive electrode and the solid electrolyte layer, the buffer layer being configured to reduce interface resistance.

7. A method for producing a nonaqueous electrolyte secondary battery including a positive electrode, a negative electrode, and a solid electrolyte layer arranged between the positive electrode and the negative electrode, the method comprising:
a sintering step of firing a powder containing a positive-electrode active material to form a positive-electrode sintered body; and
a covering step of forming a cover layer containing a positive-electrode active material on a surface of the positive-electrode sintered body adjacent to the solid electrolyte layer by a gas-phase method.

8. The method for producing a nonaqueous electrolyte secondary battery according to . Claim 7, further comprising subjecting the cover layer to annealing treatment.
